# EUROPÄISCHE PATENTSCHRIFT

(11) **EP 2 574 230 B1**
(45) Veröffentlichungstag und Bekanntmachung des Hinweises auf die Patenterteilung: **24.01.2018**
(21) Anmeldenummer: 12006709.5
(22) Anmeldetag: 26.09.2012
(51) Int. Cl.: A01D 67/00

(54) **Selbstfahrende Arbeitsmaschine**
Self-propelled work machine
Machine de travail automobile

(30) Priorität: 29.09.2011 DE 102011115268
(43) Veröffentlichungstag der Anmeldung: 03.04.2013
(73) Patentinhaber: Maschinenfabrik Bernard Krone GmbH, 48480 Spelle (DE)
(72) Erfinder: Mählmann, Hannes, 48477 Hörstel (DE); Meyer, Stephan, 49832 Andervenne (DE)

(56) Entgegenhaltungen:
- DE-C- 927 422
- GB-A- 1 475 789
- US-A- 4 418 783
- US-A1- 2003 020 323
- US-A1- 2011 148 053

## Beschreibung

Die Erfindung betrifft eine selbstfahrende Arbeitsmaschine gemäß dem Oberbegriff des Anspruchs 1. Derartige Arbeitsmaschinen, vorzugsweise zur landwirtschaftlichen Nutzung, wie beispielsweise zum Ernten und Zerkleinern von verschiedenartigem Erntegut, sind aus der Praxis in zahlreichen Ausführungsformen bekannt. Die Arbeitsmaschinen umfassen im Wesentlichen ein Antriebsaggregat zur Versorgung zumindest eines Arbeitsaggregats und zumindest eines Fahrantriebs mit Antriebsenergie und ein zumindest eine Vorderachse und zumindest eine Hinterachse aufweisendes Fahrgestell, welches über Bodeneingriffsmittel, wie Räder oder mittlerweile in der Landwirtschaft häufig verwendete Raupenfahrwerke, gegenüber dem Erdboden abgestützt ist. Je nach Einsatzbedingungen der Maschinen sind zum einen zur Vermeidung von schädlichen Bodenverdichtungen der befahrenden Ackerflächen und zum anderen zur besseren Verteilung des Gewichts der Maschine unterschiedliche Größen von Bodeneingriffsmitteln erforderlich. Beispielsweise je breiter die Bodeneingriffsmittel sind, desto größer ist die Kontaktfläche zwischen den Bodeneingriffsmitteln und dem Boden und desto geringer ist die Bodenbeanspruchung. Des Weiteren kann durch Bodeneingriffsmittel mit größeren Durchmessern eine große Bodenfreiheit geschaffen werden. Dadurch, dass also bei einem Maschinentyp Bodeneingriffsmittel mit sehr unterschiedlichen Höhen angebracht werden können, kommt es, wie bereits erwähnt, zu enormen Unterschieden der Abstände zwischen der Arbeitsmaschine und dem Erdboden. Wird beispielsweise an einer Erntemaschine an der vorderen Fahrzeugachse ein höheres Rad verwendet als das, welches für das Fahrgestell des Feldhäckslers ausgelegt wurde, vergrößert sich der Abstand zwischen der Erntemaschine und dem Erdboden und somit ebenso der Winkel zwischen dem an der Erntemaschine frontseitig angebauten Erntevorsatz und dem das Erntegut aufnehmenden Einzugsaggregat der Erntemaschine. Durch diese, durch die verschiedenen zur Verfügung stehenden Größen der Bodeneingriffsmittel verursachten Höhenunterschiede zwischen den Arbeitsaggregaten einer Arbeitsmaschine kann es sowohl bei der Aufnahme von Erntegut von einer Feldfläche als auch bei der Zuführung des Ernteguts zu nachfolgenden Förder- und/oder Schneidvorrichtungen zu Störungen im Erntegutfluss kommen, so dass keine optimale Leistungsfähigkeit der Arbeitsmaschine gewährleistet werden kann.

In der Praxis sind zahlreiche Ausführungen zur Höhenregulierung eines Fahrwerks von Arbeitsmaschinen bekannt. Jedoch erfolgen diese Anpassungen dynamisch im Feldeinsatz in Abhängigkeit von bestimmten Feldeigenschaften, wie beispielsweise zum Ausgleich von Hanglagen. Hierzu kann beispielsweise die DE 100 00 145 A1 genannt werden, bei der eine Achse einer landwirtschaftlichen Arbeitsmaschine eine hydraulisch betätigbare Verstellvorrichtung zum Ausgleich einer Hangneigung aufweist.

Aus der GB 1 475 789 A geht eine landwirtschaftliche Maschine in der Art eines Mähdreschers hervor, bei der über eine Radachsenverstellvorrichtung der Abstand der Maschine zum Erdboden verstellt werden kann. Der Radaufhängung und dem Antrieb der Antriebsräder dienende Getriebegehäuse sind dazu verschwenkbar an Befestigungsflanschen des Maschinenrahmens in unterschiedlichen Schwenkstellungen arretierbar, wobei über Schraubbolzen her eine Verbindung zwischen den Getriebegehäusen und den Befestigungsflanschen hergestellt werden kann. Die Befestigungsflansche weisen dazu zwei zueinander beabstandete Lochreihen auf, in denen die Schraubbolzen einsetzbar und in Gewindebohrungen der Getriebegehäuse einschraubbar sind. Eine derartige Radachsenverstellung ist mit dem Mangel eines eng begrenzten Verstellbereiches behaftet.

Die DE 927 422 C zeigt und beschreibt ein Fahrgestell insbesondere für Landmaschinen, dessen Laufradachse höhenverstellbar am Fahrgestell angebracht ist. Dazu ist es vorgesehen, dass die Laufradachse an einer zum Fahrgestell relativ verdrehbaren Scheibe exzentrisch angeordnet ist. Diese Ausführungsform lässt nicht erkennen, in welcher Weise Antriebsanordnungen für den Radantrieb mit dem erhöhten Verstellaufwand vereinbar sind.

Demnach liegt der Erfindung die Aufgabe zu Grunde, eine verbesserte selbstfahrende Arbeitsmaschine zu schaffen, bei der kostengünstig und ohne großen Aufwand das Fahrgestell an die Höhe der die Arbeitsmaschine gegenüber dem Erdboden abstützenden Bodeneingriffsmittel angepasst werden kann.

Gelöst wird die Aufgabe der Erfindung mit den kennzeichnenden Merkmalen des Anspruchs 1. Weitere vorteilhafte Ausgestaltungen der Erfindung sind Gegenstand der weiteren Ansprüche.

Gemäß der Erfindung wird eine selbstfahrende Arbeitsmaschine, insbesondere eine landwirtschaftliche Erntemaschine, mit einem Antriebsaggregat zur Versorgung zumindest eines Arbeitsaggregates und zumindest eines Fahrantriebs mit Antriebsenergie und mit einem zumindest eine Fahrzeugachse aufweisenden Fahrgestell vorgeschlagen, wobei die zumindest eine Fahrzeugachse im Wesentlichen aus zwei Tragrahmen und Mitteln zur Aufnahme und Lagerung von die Arbeitsmaschine gegenüber dem Erdboden abstützenden Bodeneingriffsmitteln bestehende Tragevorrichtungen umfasst, wobei die Tragevorrichtungen der zumindest einen Fahrzeugachse jeweils eine Verstelleinrichtung zur höhenveränderlichen Befestigung der Mittel zur Aufnahme und Lagerung der die Arbeitsmaschine gegenüber dem Erdboden abstützenden Bodeneingriffsmitteln in Abhängigkeit von der Höhe der Bodeneingriffsmittel (3) aufweisen und die Verstellung der Mittel zur Aufnahme und Lagerung von den die Arbeitsmaschine gegenüber dem Erdboden abstützenden Bodeneingriffsmitteln mittels einer zur Anbringung der Mittel an einen Tragrahmen der zumindest einen Fahrzeugachse verwendeten Flanscheinrichtung erfolgt, die exzentrisch ausgebildet ist und wobei die Mittel zur Aufnahme und Lagerung des Bodeneingriffsmittels über einen Radmotor, ein dazugehöriges Radgetriebe und entsprechende Befestigungsstellen verfügen, an denen zum einen das Bodeneingriffsmittel und zum anderen die für das Anbringen der Mittel zur Aufnahme und Lagerung des Bodeneingriffsmittels verwendete Flanscheinrichtung montierbar ist.

Dabei können die Bodeneingriffsmittel als angetriebene Räder oder als Raupenfahrwerke ausgeführt sein. Die Bodeneingriffsmittel sind auf an Tragrahmen der zumindest einen Fahrzeugachse montierten Mitteln zur Aufnahme und Lagerung der Bodeneingriffsmittel gelagert, wobei die Mittel zur Aufnahme und Lagerung der Bodeneingriffsmittel unter anderem gewöhnliche Naben oder bei einem durch einen Motor angetriebenen Bodeneingriffsmittel Getriebe sein können. Da bei angetriebenen Bodeneingriffsmitteln die für den Antrieb der Bodeneingriffsmittel erforderlichen Antriebseinrichtungen, wie beispielsweise Radmotoren, groß dimensioniert sind und so nicht in die Tragrahmen der zumindest einen Fahrzeugachse geführt werden können, sind diese Tragrahmen der Größe der Radmotoren angepasst. Dementsprechend ist es bei den angetriebenen Bodeneingriffsmitteln üblich, die Mittel zur Aufnahme und Lagerung der Bodeneingriffsmittel jeweils über eine Flanscheinrichtung an die Tragrahmen der Fahrzeugsachse zu befestigen. Diese Flanscheinrichtung wird über Befestigungsmittel zum einen an die Mittel zur Aufnahme und Lagerung der Bodeneingriffsmittel und zum anderen an dem jeweiligen Tragrahmen der zumindest einen Fahrzeugachse montiert. Sie ist vorzugsweise als eine an die Größe des Tragrahmens angepasste Flanschplatte mit gegenüberliegenden Lochbildern exzentrisch ausgebildet. Um nun die unterschiedlichen Höhen der zur Verfügung stehenden Bodeneingriffsmittel auszugleichen, so dass im Betrieb die Funktionssicherheit von bestimmten Arbeitsaggregaten der Arbeitsmaschine erhalten bleibt, kann die Flanscheinrichtung mit den Mitteln zur Aufnahme und Lagerung der Bodeneingriffsmittel je nach Höhe der Bodeneingriffsmittel in zumindest eine obere und zumindest eine untere Position an den Tragrahmen angebracht werden. Durch eine Schwenkbewegung der Flanscheinrichtung kann zwischen den zumindest zwei Positionen gewechselt werden. Dementsprechend wird erfindungsgemäß bei höheren Bodeneingriffsmitteln die obere Stellung und bei niedrigeren Bodeneingriffsmitteln die untere Stellung der Mittel zur Aufnahme und Lagerung der Bodeneingriffsmittel in Bezug zu dem jeweiligen Tragrahmen der Fahrzeugachse gewählt. In einer vorteilhaften Weiterbildung kann es auch vorstellbar sein, dass mit der vertikalen Verstellung auch eine Verstellung in oder entgegen der Fahrtrichtung einhergeht. Eine gleichzeitige Verstellung nach vorn/unten oder nach hinten/oben würde zu einer verbesserten Lastverteilung beitragen.

Somit wird eine selbstfahrende Arbeitsmaschine bereitgestellt, deren Tragevorrichtungen der Fahrzeugachsen an verschiedenste Höhen von Bodeneingriffsmitteln in der Höhe angepasst werden können, so dass der Höhenunterschied zwischen bestimmten Arbeitsaggregaten ausgeglichen wird und es im Betrieb der Arbeitsmaschine nicht zu Beeinträchtigungen der Funktionen der Arbeitsmaschine kommt und somit eine optimale Leistungsfähigkeit der Arbeitsmaschine gewährleistet ist.

Weitere Vorteile und Einzelheiten der Erfindung ergeben sich aus einem in den Zeichnungen dargestellten Ausführungsbeispiel, das im Folgenden beschrieben wird.

In der Zeichnung zeigt:
- **Fig. 1:**: eine Seitenansicht einer erfindungsgemäßen als Feldhäcksler ausgeführten, selbstfahrenden Arbeitsmaschine;
- **Fig. 2:**: einen perspektivisch und teils schematisch dargestellten Ausschnitt eines vorderen Bereichs der selbstfahrenden Arbeitsmaschine nach Fig. 1;
- **Fig. 3:**: eine Explosionszeichnung der Tragevorrichtung einer Fahrzeugachse der erfindungsgemäßen, selbstfahrenden Arbeitsmaschine.

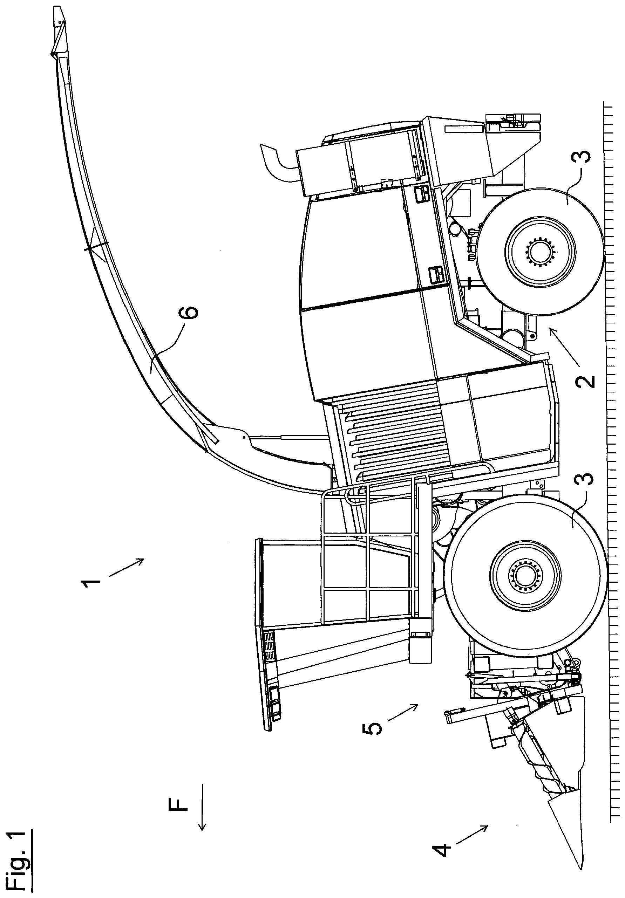

Der in **Fig. 1** ganz allgemein dargestellte Feldhäcksler als Ausführungsbeispiel einer selbstfahrenden Arbeitsmaschine 1 ist eine Erntemaschine zum Aufnehmen und Häckseln von Erntegut wie Gras, Mais oder dgl. Erntegüter. Die Arbeitsmaschine 1 umfasst im Wesentlichen nicht dargestellte Antriebsaggregate zur Versorgung zumindest eines Arbeitsaggregats und zumindest eines Fahrantrieb mit Antriebsenergie und ein Fahrgestell 2, welches sich über als Räder ausgebildete Bodeneingriffsmittel 3 einer Fahrzeugachse 7 auf dem Erdboden abstützt. Für den jeweiligen Erntevorgang trägt die Arbeitsmaschine 1 frontseitig ein Vorsatzgerät 4, beispielsweise ein Maisgebiss, an das sich eine Einzugseinrichtung 5 mit nachfolgender in der Fig. 1 nicht dargestellter Häckseleinrichtung anschließt. Aus der Häckseleinrichtung gelangt das gehäckselte Erntegut zu einer Konditioniereinrichtung, von der das gehäckselte Erntegut mittels eines Auswurfbeschleunigers durch den Auswurfkrümmer 6 auf ein dem Abtransport dienendes Sammelfahrzeug übergeladen wird.

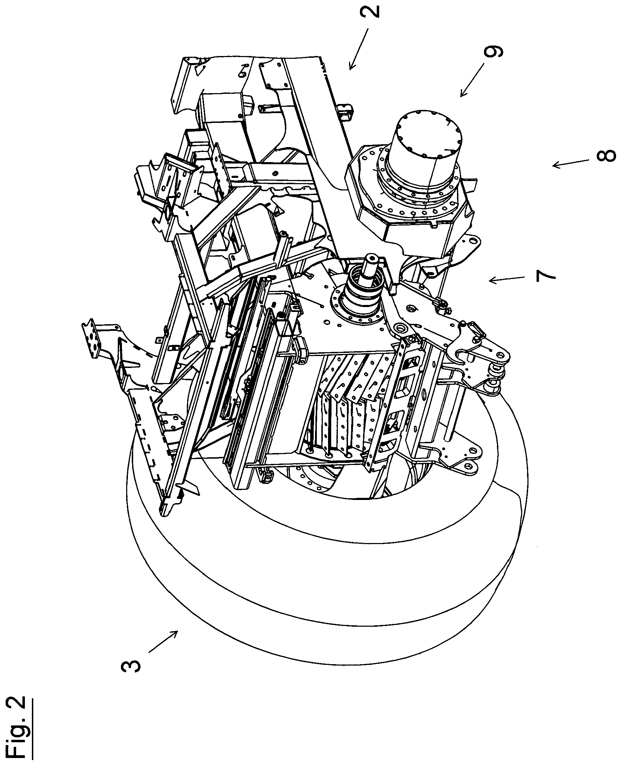

**Fig. 2** zeigt einen perspektivisch und teils schematisch dargestellten Ausschnitt eines in Fahrtrichtung F vorderen Bereichs des als mögliche Ausführung einer erfindungsgemäßen Arbeitsmaschine 1 dargestellten Feldhäckslers aus Fig. 1. Insbesondere ist in der Fig. 2 die Anordnung der an dem Fahrgestell 2 angebrachten vorderen Fahrzeugachse 7 mit den Tragevorrichtungen 8 und den dazugehörigen Mitteln 9 zur Aufnahme und Lagerung der Bodeneingriffsmittel 3 zu sehen. Zur besseren Erkennbarkeit zumindest einer Tragevorrichtung 8 wurde bei der in Fahrtrichtung F gesehen linken Seite der selbstfahrenden Arbeitsmaschine 1 das als auf der in Fahrtrichtung F gesehen linken Seite der selbstfahrenden Arbeitsmaschine 1 erkennbare Bodeneingriffsmittel 3 entfernt. Ferner sind in der Fig. 2 bestimmte Bauteile und Arbeitsaggregate, wie die in der Fig. 2 nicht bezifferte Häckseleinrichtung und der Hauptrahmen, auf dem die Fahrerkabine angebracht wird, zur besseren Erkennbarkeit der Lage der erfindungsgemäßen Vorrichtungen an der selbstfahrenden Arbeitsmaschine 1 zu erkennen.

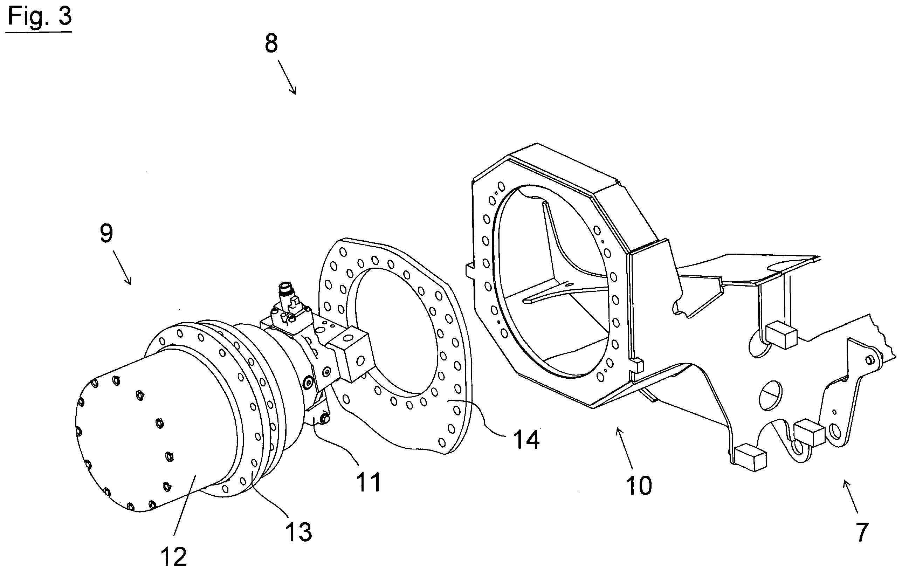

Die Bestandteile der in Fahrtrichtung F gesehen linken Tragevorrichtung 8 sind in einer in der **Fig. 3** gezeigten Explosionszeichnung näher dargestellt. Die Tragevorrichtung 8 der vorderen Fahrzeugachse 7 der erfindungsgemäßen Arbeitsmaschine 1 besteht aus einem im Wesentlichen oval förmigen mit Bohrungen versehenen Tragrahmen 10, an dem die Mittel 9 zur Aufnahme und Lagerung des Bodeneingriffsmittels 3 befestigt werden. Die Mittel 9 zur Aufnahme und Lagerung des als Antriebsrad ausgeführten Bodeneingriffsmittels 3 verfügen über einen Radmotor 11, einem dazugehörigem Radgetriebe 12 und entsprechende Befestigungsstellen 13, an denen zum einen das Bodeneingriffsmittel 3 und zum anderen eine für das Anbringen der Mittel 9 zur Aufnahme und Lagerung des Bodeneingriffsmittels 3 üblicherweise verwendete Flanscheinrichtung 14 montiert werden, wobei die Flanscheinrichtung 14 in diesem Ausführungsbeispiel gleichzeitig die Verstelleinrichtung zur höhenveränderlichen Befestigung der Mittel 9 zur Aufnahme und Lagerung des Bodeneingriffsmittels 3 in Abhängigkeit von der Höhe der Bodeneingriffsmittel 3 darstellt. Die Flanscheinrichtung 14 ist in diesem Ausführungsbeispiel als eine Flanschplatte ausgebildet, welche Lochbilder aufweist, in denen Befestigungsschrauben eingeführt werden können. Zudem ist die als Flanschplatte ausgeführte Flanscheinrichtung 14 exzentrisch ausgebildet, d.h. sie weist einen versetzten Mittelpunkt auf, so dass die Mittel 9 zur Aufnahme und Lagerung des Bodeneingriffsmittels 3 durch eine 180 Grad-Drehung der Flanscheinrichtung 14 sowohl in eine in Bezug zum Tragrahmen 10 obere Position als auch eine in Bezug zum Tragrahmen untere Position angeordnet werden können. Soll folglich ein in dieser Ausführung als Rad ausgebildetes Bodeneingriffsmittel 3 mit einem größeren Durchmesser angebracht werden, wird die Flanscheinrichtung 14 mit den Mitteln 9 zur Aufnahme und Lagerung des Bodeneingriffsmittels 3 in der bezüglich des Tragrahmens 10 der Fahrzeugachse 7 oberen Position befestigt. Dementsprechend wird bei der Verwendung eines Bodeneingriffsmittels 3 mit geringerer Höhe die bezüglich des Tragrahmens 10 untere Position gewählt.

Die erfindungsgemäße Ausführungsform einer selbstfahrenden Arbeitsmaschine stellt eine besonders kostengünstige und konstruktiv einfache realisierbare Lösung insbesondere zur Anpassung der bei unterschiedlichen Höhen der Bodeneingriffsmittel 3 entstehenden Höhenunterschiede der Arbeitsaggregate der selbstfahrenden Arbeitsmaschine 1 und daran frontseitig angebaute Vorsatzgeräte 4 dar. Somit wird eine selbstfahrende Arbeitsmaschine bereitgestellt, welche mithilfe zusätzlicher Befestigungsmöglichkeiten der Mittel 9 zur Aufnahme und Lagerung der Bodeneingriffsmittel 3 die verschiedenen Höhen der zahlreichen Varianten der Bodeneingriffsmittel 3 ausgleicht und somit die optimale Leistungsfähigkeit der selbstfahrenden Arbeitsmaschine 1 gewährleistet bleibt.

## Patentansprüche

1. Selbstfahrende Arbeitsmaschine (1), insbesondere eine landwirtschaftliche Erntemaschine, mit einem Antriebsaggregat zur Versorgung zumindest eines Arbeitsaggregates und zumindest eines Fahrantriebs mit Antriebsenergie und mit einem zumindest eine Fahrzeugachse (7) aufweisenden Fahrgestell (2), wobei die zumindest eine Fahrzeugachse (7) im Wesentlichen aus zwei Tragrahmen (10) und Mitteln (9) zur Aufnahme und Lagerung von die Arbeitsmaschine gegenüber dem Erdboden abstützenden Bodeneingriffsmitteln (3) bestehende Tragevorrichtungen (8) umfasst, wobei die Tragevorrichtungen (8) der zumindest einen Fahrzeugachse (7) jeweils eine Verstelleinrichtung zur höhenveränderlichen Befestigung der Mittel (9) zur Aufnahme und Lagerung der die Arbeitsmaschine (1) gegenüber dem Erdboden abstützenden Bodeneingriffsmitteln (3) in Abhängigkeit von der Höhe der Bodeneingriffsmittel (3) aufweisen und die Verstellung der Mittel (9) zur Aufnahme und Lagerung von den die Arbeitsmaschine (1) gegenüber dem Erdboden abstützenden Bodeneingriffsmitteln (3) mittels einer zur Anbringung der Mittel (9) an einen Tragrahmen (10) der zumindest einen Fahrzeugachse (7) verwendeten Flanscheinrichtung (14) erfolgt, die exzentrisch ausgebildet ist, **dadurch gekennzeichnet, dass** die Mittel (9) zur Aufnahme und Lagerung des Bodeneingriffsmittels (3) über einen Radmotor (11), ein dazugehöriges Radgetriebe (12) und entsprechende Befestigungsstellen (13) verfügen, an denen zum einen das Bodeneingriffsmittel (3) und zum anderen die für das Anbringen der Mittel (9) zur Aufnahme und Lagerung des Bodeneingriffsmittels (3) verwendete Flanscheinrichtung (14) montierbar ist.

2. Selbstfahrende Arbeitsmaschine (1) nach Anspruch 1, **dadurch gekennzeichnet, dass** die Mittel (9) zur Aufnahme und Lagerung von den die Arbeitsmaschine (1) gegenüber dem Erdboden abstützenden Bodeneingriffsmitteln (3) durch die Verstelleinrichtung in Bezug zum Fahrgestell (2) in zumindest eine untere und zumindest eine obere Stellung verstellbar sind.

3. Selbstfahrende Arbeitsmaschine (1) nach Anspruch 2, **dadurch gekennzeichnet, dass** mit der Verstellung der Mittel (9) zur Aufnahme und Lagerung von den die Arbeitsmaschine (1) gegenüber dem Erdboden abstützenden Bodeneingriffsmitteln (3) in zumindest eine untere und zumindest eine obere Stellung zusätzlich eine Verstellung in zumindest eine vordere und zumindest eine hintere Stellung einhergeht.

4. Selbstfahrende Arbeitsmaschine (1) nach zumindest einem der vorhergehenden Ansprüche, **dadurch gekennzeichnet, dass** die zur Anbringung der Mittel (9) zur Aufnahme und Lagerung von den die Arbeitsmaschine (1) gegenüber dem Erdboden abstützenden Bodeneingriffsmitteln (3) an einem Tragrahmen (10) der zumindest einen Fahrzeugachse (7) verwendete Flanscheinrichtung (14) als Flanschplatte mit Lochbildern ausgeführt ist.

5. Selbstfahrende Arbeitsmaschine (1) nach zumindest einem der vorhergehenden Ansprüche, **dadurch gekennzeichnet, dass** die Verstellung der Mittel (9) zur Aufnahme und Lagerung von den die Arbeitsmaschine (1) gegenüber dem Erdboden abstützenden Bodeneingriffsmitteln (3) durch eine Verschwenkbewegung der exzentrisch ausgebildeten Flanscheinrichtung (14) erfolgt.

6. Selbstfahrende Arbeitsmaschine (1) nach zumindest einem der vorhergehenden Ansprüche, **dadurch gekennzeichnet, dass** die die Arbeitsmaschine (1) gegenüber dem Erdboden abstützenden Bodeneingriffsmittel (3) zumindest einer Fahrzeugachse (7) als Räder ausgebildet sind.

7. Selbstfahrende Arbeitsmaschine (1) nach zumindest einem der Ansprüche 1 bis 6, **dadurch gekennzeichnet, dass** die die Arbeitsmaschine (1) gegenüber dem Erdboden abstützenden Bodeneingriffsmittel (3) zumindest einer Fahrzeugachse (7) als Raupenfahrwerke ausgebildet sind.

## Claims

1. Self-propelled work machine (1), in particular an agricultural harvester, comprising a drive unit for supplying at least one work unit and at least one travel drive with drive power and comprising a chassis (2) that comprises at least one vehicle axle (7), the at least one vehicle axle (7) comprising supporting apparatuses (8) that substantially consist of two supporting frames (10) and means (9) for receiving and bearing ground-penetrating means (3) supporting the work machine with respect to the ground, the supporting apparatuses (8) of the at least one vehicle axle (7) each comprising an adjustment device for fastening, in a height-adjustable manner, the means (9) for receiving and bearing the ground-penetrating means (3) supporting the work machine (1) with respect to the ground, on the basis of the height of the ground-penetrating means (3), and the means (9) for receiving and bearing the ground-penetrating means (3) supporting the work machine (1) with respect to the ground being adjusted by means of an eccentric flange device (14) that is used to attach the means (9) to a supporting frame (10) of the at least one vehicle axle (7), **characterised in that** the means (9) for receiving and bearing the ground-penetrating means (3) comprise a wheel motor (11), an associated wheel transmission (12) and corresponding fastening points (13) at which both the ground-penetrating means (3) and the flange device (14) that is used to attach the means (9) for receiving and bearing the ground-penetrating means (3) can be mounted.

2. Self-propelled work machine (1) according to claim 1, **characterised in that** the means (9) for receiving and bearing the ground-penetrating means (3) supporting the work machine (1) with respect to the ground can be adjusted relative to the chassis (2) into at least one lower position and at least one upper position by means of the adjustment device.

3. Self-propelled work machine (1) according to claim 2, **characterised in that** the adjustment of the means (9) for receiving and bearing the ground-penetrating means (3) supporting the work machine (1) with respect to the ground, into at least one lower position and at least one upper position is additionally accompanied by an adjustment into at least one front position and at least one rear position.

4. Self-propelled work machine (1) according to at least one of the preceding claims, **characterised in that** the flange device (14) that is used to attach the means (9) for receiving and bearing the ground-penetrating means (3) supporting the work machine (1) with respect to the ground, to a supporting frame (10) of the at least one vehicle axle (7) is designed as a flange plate having hole patterns.

5. Self-propelled work machine (1) according to at least one of the preceding claims, **characterised in that** the means (9) for receiving and bearing the ground-penetrating means (3) supporting the work machine (1) with respect to the ground are adjusted by a pivot movement of the eccentric flange device (14).

6. Self-propelled work machine (1) according to at least one of the preceding claims, **characterised in that** the ground-penetrating means (3) of at least one vehicle axle (7), which support the work machine (1) with respect to the ground, are designed as wheels.

7. Self-propelled work machine (1) according to at least one of claims 1 to 6, **characterised in that** the ground-penetrating means (3) of at least one vehicle axle (7), which support the work machine (1) with respect to the ground, are designed as tracklaying gears.

## Revendications

1. Machine de travail automobile (1), en particulier moissonneuse agricole comprenant un ensemble d'entraînement permettant d'alimenter en énergie au moins un ensemble de travail et au moins un mécanisme de roulement, et un châssis (2) équipé d'au moins un essieu (7), cet essieu (7) comprenant des dispositifs porteurs (8) essentiellement constitués de deux cadres porteurs (10) et de moyens (9) de réception et de montage de moyens venant en contact avec le sol (3) permettant l'appui de la machine de travail sur le sol, les dispositifs porteurs (8) de l'essieu (7) comportant chacun un dispositif de réglage permettant la fixation variable en hauteur des moyens (9) de réception et de montage des moyens venant en contact avec le sol (3) permettant l'appui de la machine de travail (1) sur le sol en fonction de la hauteur de ces moyens venant en contact avec le sol (3), et le réglage des moyens (9) de réception et de montage des moyens venant en contact avec le sol (3) permettant l'appui de la machine de travail (1) sur le sol s'effectuant au moyen d'un dispositif à bride (14) utilisé pour monter les moyens (9) sur un cadre porteur (10) de l'essieu (7) et réalisé de manière excentrique,
**caractérisée en ce que**
les moyens (9) de réception et de montage des moyens venant en contact avec le sol (3) sont équipés d'un moteur de roue (11), d'une transmission de roue (12) associée et d'emplacements de fixation (13) correspondant sur lesquels peuvent être montés d'une part, les moyens venant en contact avec le sol (3) et d'autre part, le dispositif à bride (14) utilisé pour monter les moyens (9) de réception et de montage des moyens venant en contact avec le sol (3).

2. Machine de travail automobile (1) conforme à la revendication 1,
**caractérisée en ce que**
les moyens (9) de réception et de montage des moyens venant en contact avec le sol (3) permettant l'appui de la machine de travail (1) sur le sol peuvent être réglés par le dispositif de réglage par rapport au châssis (2) dans au moins une position inférieure et au moins une position supérieure.

3. Machine de travail automobile (1) conforme à la revendication 2,
**caractérisée en ce que**
le réglage des moyens (9) de réception et de montage des moyens venant en contact avec le sol (3) permettant l'appui de la machine de travail (1) sur le sol dans au moins une position inférieure et au moins une position supérieure, s'accompagne en outre d'un réglage dans au moins une position avant et dans au moins une position arrière.

4. Machine de travail automobile (1) conforme à au moins l'une des revendications précédentes,
**caractérisée en ce que**
le dispositif à bride (14) utilisé pour monter les moyens (9) de réception et de montage des moyens venant en contact avec le sol (3) permettant l'appui de la machine de travail (1) sur le sol sur un cadre porteur (10) de l'essieu (7) sont réalisés sous la forme d'une plaque à bride équipée de configurations de perçages.

5. Machine de travail automobile (1) conforme à au moins l'une des revendications précédentes,
**caractérisée en ce que**
le réglage des moyens (9) de réception et de montage des moyens venant en contact avec le sol (3) permettant l'appui de la machine de travail (1) sur le sol s'effectue par un pivotement du dispositif à bride (14) réalisé excentrique.

6. Machine de travail automobile (1) conforme à au moins l'une des revendications précédentes,
**caractérisée en ce que**
les moyens venant en contact avec le sol (3) permettant l'appui de la machine de travail (1) sur le sol d'au moins un essieu (7) sont réalisés sous la forme de roues.

7. Machine de travail automobile (1) conforme à au moins l'une des revendications 1 à 6,
**caractérisée en ce que**
les moyens venant en contact avec le sol (3) permettant l'appui de la machine de travail (1) sur le sol d'au moins un essieu (7) sont réalisés sous la forme de chenilles.
